# EUROPÄISCHE PATENTSCHRIFT

(11) **EP 4 080 079 B1**
(45) Veröffentlichungstag und Bekanntmachung des Hinweises auf die Patenterteilung: **12.02.2025**
(21) Anmeldenummer: 22166201.8
(22) Anmeldetag: 31.03.2022
(51) Int. Cl.: F16D 55/36, B60T 7/20, B60T 13/08, B62D 63/06, B62D 63/08, B62K 27/00, B62K 27/12, B62L 3/00

(54) **BREMSVORRICHTUNG**
BRAKING DEVICE
DISPOSITIF DE FREINAGE

(30) Priorität: 01.04.2021 DE 102021001884
(43) Veröffentlichungstag der Anmeldung: 26.10.2022
(73) Patentinhaber: Thiel, Karl, 22763 Hamburg (DE)
(72) Erfinder: Thiel, Karl, 22763 Hamburg (DE)
(74) Vertreter: Lenzing Gerber Stute

(56) Entgegenhaltungen:
- EP-B1- 1 145 894
- EP-B2- 1 402 767
- CH-A- 274 419
- DE-A1- 102012 015 199
- DE-B4- 19 648 979
- DE-B4- 19 822 767
- DE-C- 959 436
- DE-U- 1 434 668

## Beschreibung

Die vorliegende Erfindung betrifft eine Bremsausrüstung gemäß dem Oberbegriff des Anspruchs 1.

Es steht eine große Vielzahl an Fahrradanhängern mit teilweise sehr großem Transportpotential am Markt zur Verfügung. Die allermeisten dieser Anhänger verfügen über keine bei Benutzung am Fahrrad wirksame Betriebsbremse, weshalb die maximal zulässige Gesamtmasse aufgrund der Beschränkung durch die StVO 40 kg beträgt. Als handbetriebene Transportkarren sind viele solcher Geräte herstellerseitig für Gesamtmassen bis 200 kg konzipiert. Daraus folgt, dass ohne geeignete Bremsausrüstung das Transportpotential dieser Fahrzeuge als Fahrradanhänger nicht ausgeschöpft werden kann. So gibt es am Markt zwar einige wenige Hersteller die gebremste Fahrradanhänger anbieten, diese Bremsausrüstungen sind jedoch nicht dafür vorgesehen, an einer größeren Anzahl unterschiedlicher am Markt erhältlicher ungebremster Fahrradanhänger verbaut zu werden. Von den Herstellern gebremster Anhänger werden gewöhnlich Eigenkonstruktionen einer Auflaufbremsmechanik in Kombination mit Bremskörpern aus dem reichhaltigen Angebot industriell gefertigter Massenware verbaut.

Die Nachrüstung vorhandener Fahrradanhänger ohne Bremse mit solchen Systemen ist mit einem erheblichen Aufwand verbunden, wenn jede Montagestelle, die für jeden Bremskörper und für den erforderlichen Deichselapparat zur Bremsbetätigung erforderlich ist, sofern die Lösung einer Auflaufbremse angestrebt wird, mit Bauteilen und Verstärkungen, die der konstruktiven Aufgabe gewachsen sind, ertüchtigt werden muss. Es erscheint jedoch sinnvoll, notwendige Änderungen am auszurüstenden Anhänger auf ein Minimum zu reduzieren, so dass auch der versierte Laie ohne Werkstattausrüstung in die Lage versetzt wird, seinen Anhänger mit einer Auflaufbremse zu versehen.

Um diesem Zweck gerecht zu werden, ist der im Folgenden gezeigte Anbausatz einer Auflaufbremse mit Schwingenapparat für die Deichsel zur Montage an Fahrradanhängern entwickelt worden, dessen signifikanten Neuerungen eine neue Art der Betätigung sowohl von Felgenbremsen als auch von Scheibenbremsen durch einen neuartigen Schwingenapparat sowie neuartige Bremszangen darstellen und der als Montageeinheit an nur wenigen Befestigungspunkten mit dem Fahrradanhänger verbunden wird.

DE 14 34 668 U offenbart die Merkmale des Oberbegriffs von Anspruch 1.

Es ist bereits nach der DE 1 434 668 eine Bremsanordnung für Fahrradanhänger bekannt geworden, die über einen an einer Anhängerdeichsel schwenkbar angeordneten doppelarmigen Hebel über einen Schenkel mit einem Bowdenzug in Verbindung steht, der auf Bremsbacken einwirkt. Hierbei ist nachteilig, dass keine komplette Baugruppe auf einer Montageplatte einsetzbar ist.

Auch nach der DE 20105 957 U1 wird eine Anordnung vorgeschlagen, die als Transporteinrichtung für einen Handwagenbetrieb oder für einen Anhängerbetrieb von Fahrrädern ausgebildet ist. Hierbei ist eine Auflaufbremse an der Anhängerzugvorrichtung mit einer Bremsvorrichtung an den Rädern verbunden, die mittels eines Seilzuges oder Gestänges betätigbar ist, wobei die Bremse als Trommelbremse auf beide Räder wirkt.

Eine Aufgabe der Erfindung ist es, Bestandteile für eine Auflaufbremse bereitzustellen. Die Bestandteile sollen in einer besonderen Ausführungsform der Erfindung insbesondere zum Nachrüsten/Ausrüsten vorhandener Fahrradanhänger zur Verfügung geeignet sein, ohne dass in die Grundkonstruktion des Fahrradanhängers durch Bohren, Sägen, Schweißen eingegriffen wird, sondern lediglich durch einfach zu befestigende Klemmvorrichtungen oder Befestigungsschellen eine komplette Baugruppe auf einer Montageplatte an dem in der Regel als Rohrrahmen ausgeführten Fahrgestell befestigt wird.

Die Aufgabe wird mit einer Bremsausrüstung mit den Merkmalen des Anspruchs 1 gelöst. Weitere bevorzugte Ausführungen der Erfindung ergeben sich aus den Unteransprüchen bzw. aus den Figuren, in denen bevorzugte Ausführungsbeispiele der Erfindung dargestellt sind, die nachfolgenden näher erläutert werden.

Es zeigen
- Fig. 1:: eine schematische Draufsicht einer erfindungsgemäßen, in einen Fahrradanhänger eingebauten Bremsausrüstung;
- Fig. 2:: eine schematische Vorderansicht der in Figur 1 dargestellten Bremsausrüstung;
- Fig. 3:: eine erste Detailansicht der in Figur 1 dargestellten Bremsausrüstung;
- Fig. 4:: eine zweite Detailansicht der in Figur 1 dargestellten Bremsausrüstung;
- Fig. 5:: eine dritte Detailansicht der in Figur 1 dargestellten Bremsausrüstung;
- Fig. 6:: eine schematische Vorderansicht eines Schwingenapparates der erfindungsgemäßen Bremsausrüstung;
- Fig. 7:: eine schematische Seitenansicht des in Figur 6 dargestellten Schwingenapparates;
- Fig. 8:: eine schematische Draufsicht des in Figur 6 dargestellten Schwingenapparates;
- Fig. 9:: eine schematische Aufsicht auf ein Detail einer weiteren Ausführungsform des Schwingenapparates mit einer Montageplatte.

Es ist vorgesehen, dass die Baugruppe die komplette Bremsmechanik inklusive Schwingenapparat (7) aufweist und wesentlich zur Aussteifung des Fahrgestells beiträgt sowie gleichzeitig damit die Leistungsfähigkeit des Anhängers erhöht. Die hier offenbarte Bremsmechanik besteht aus den Funktionsgruppen Bremszangen mit Stößel (3) sowie Schwingenapparat für Bremsbetätigung (7), die beide auf der Montageplatte für den Bremsapparat (9) montiert sind, um so als Einheit am Fahrgestell des Fahrradanhängers montiert werden zu können. Dazu werden zur Montage der Befestigungsschellen (10) vorzugsweise Lochraster in der Montageplatte vorgesehen, die es erlauben, eine Vielzahl unterschiedlicher Fahrradanhänger auszurüsten.

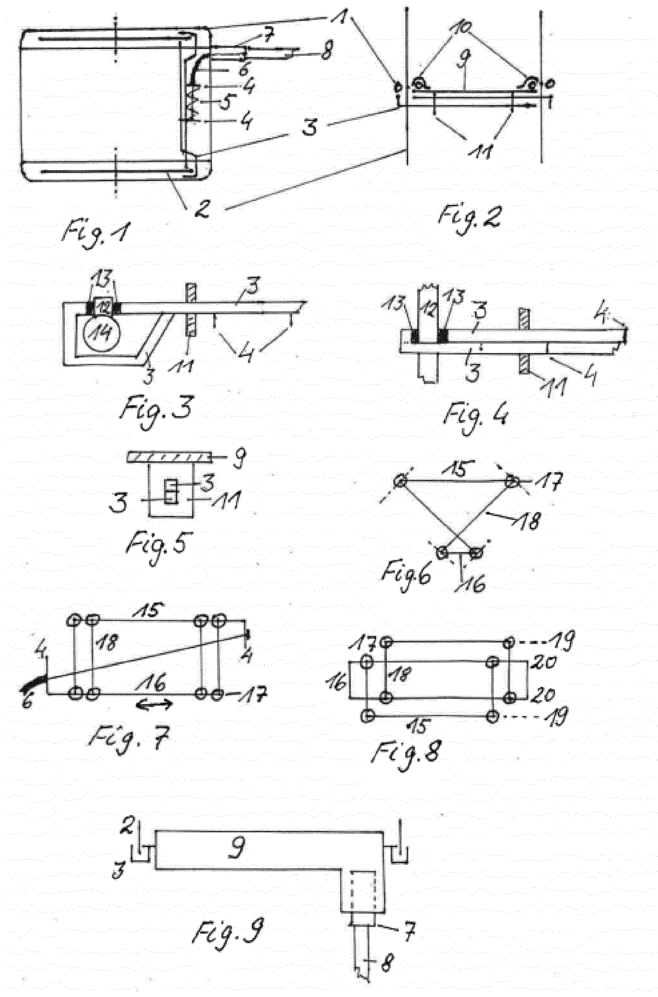

Die Funktionsgruppe Bremszange besteht lediglich aus zwei gegeneinander beweglichen, baugleichen Bremszangenhälften mit Stößel (3), die sowohl zur Betätigung als Felgenbremse, wie in Fig. 3 dargestellt, als auch zur Betätigung als Scheibenbremse ausgebildet sein können. Beiden gemeinsam ist, dass jedes Teil auf der einen Seite um das Rad oder die Bremsscheibe (2) zangenförmig herumgebogen ist und dort auf die Außenseite der Bremsscheibe oder Felge (12) wirkt und auf der anderen Seite als Stößel ausgebildet ist, der der gebogenen Seite der anderen Bremszangenhälfte mit Stößel (3) an dem jeweiligen Rad von der Innenseite genau entgegenwirkt wie in Fig. 1 bis 4 dargestellt. Das bedeutet, im Gegensatz zu herkömmlichen Bremszangen wirkt hier jede Bremszangenhälfte auf zwei Räder gleichzeitig.

Es ist vorteilhaft, die Bremsbeläge (13) so anzuordnen, dass sich die Flächenschwerpunkte der Bremsbeläge (13) an jedem Rad oder Bremsscheibe (2) koaxial zueinander bewegen. In der Fig. 1 sind die Bremszangenhälften mit Stößel (3) wegen der besseren Verständlichkeit zur Funktion hintereinander dargestellt. Fig. 2 bis 5 geben die tatsächliche Einbaulage übereinander wieder. Vorzugsweise aus Vierkantrohr gefertigt, sind sie übereinander passgenau beweglich links und rechts jeweils in einer Lagerung der Bremszange (11) schwimmend gelagert. Zweckmäßigerweise werden die Lagerungen der Bremszange (11) auf Lochrastern in der Montageplatte (9) montiert, um variable Montagemöglichkeiten an einer Vielzahl von Modellen zu ermöglichen. Die Montageplatte (9) wiederum wird mit einfachen Befestigungselementen (10) wie z.B. Schellen oder Klemmen am Rohrrahmen (1) des Anhängers befestigt.

Die Achse jedes Vierkantrohres sollte auf der Stößelseite durch den Flächenschwerpunkt der Bremsbeläge (13) laufen. Aus dieser Anforderung in Verbindung mit der oben genannten Forderung der koaxialen Bewegung der zusammengehörenden Bremsbelags-Flächenschwerpunkte, ergibt sich die geometrische Anordnung der Bremsbelagsbefestigung wie andeutungsweise aus Fig. 2 und 4 ersichtlich ist. Aus der Anwendung dieser Maßnahmen resultiert die Vermeidung von Torsion um die gemeinsame Flächenschwerpunktachse beider Vierkantrohre bei Betätigung der Bremse, wodurch ein Verkanten in den Lagerungen der Bremszangen (11) vermieden wird. Bei Befolgung aller vorgenannten Konstruktionsregeln ergibt sich ein vertikaler Versatz der Bremswirkachsen zwischen beiden Rädern um eine Rohrstärke, z.B. bei zwanziger Quadratrohr um 20 mm. Durch Zentrieren des Bremszangenpakets mit seiner gemeinsamen Flächenschwerpunktsachse auf die Mitte der durchlaufenden Sehne von Rad oder Bremsscheibe (2), lässt sich dieses Problem einfach lösen.

Zur Anpassung der Bremse an unterschiedliche Fahrzeugbreiten sowie zur Einstellung des Bremsspiels lässt sich die Länge der Bremszangen mit Stößel (3) variabel gestalten, z.B. als Ausführung mit teleskopartig ineinander schiebbaren Rohren mit Feststellmöglichkeit und/oder mit Einstellschrauben an den Bremsbelagsaufnahmen.

Die Betätigung der Bremse erfolgt am einfachsten über einen Seilzug mit Seilhülle (6), betätigt vom Schwingenapparat (7) für Bremsbetätigung. An den Bremszangen mit Stößel (3) befindet sich jeweils ein Widerlager für Seilzug oder -hülle (4), die beide gegen die Rückholfeder (5) zusammenziehen und somit die Räder oder Bremsscheiben (2) bekneifen. Ausführungen mit pneumatischer, hydraulischer oder elektromagnetischer Betätigung sind nach den bekannten Regeln der Technik ebenfalls möglich. Bei richtiger Grundeinstellung der Bremszangen mit Stößel (3) ist wegen derer schwimmenden Lagerung die Bremswirkung an beiden Rädern gleich. Alternativ zur Rückholfeder (5) oder zusätzlich dazu, können auch einstellbare Federn, befestigt zwischen Bremszangenhälften (3) und Lagerung der Bremszange (11), angebracht werden, um beim Lösen der Bremse die Bremszangen (3) reibungsfrei zu zentrieren.

Der Schwingenapparat (7) für die Bremsbetätigung ist in Fig. 6 bis 8 dargestellt. Ein Schwingenapparat (7) funktioniert besonders bei hohen Ladungsschwerpunkten und Nickschwingungen reibungsärmer als gewöhnliche Teleskoprohrlösungen, woraus ein sensibleres Ansprechen der Auflaufbremse resultiert. Der Schwingenapparat (7) hat einerseits die Schubkraft des Anhängers zur Auslösung der Auflaufbremse zu übertragen, andererseits die senkrechte und horizontale Seitenführung des Deichselrohrs (8) gegenüber dem Anhänger sicherzustellen. Um diese Aufgaben bei kompakter Baugröße erfüllen zu können, wird eine Konstruktion wie in den Fig. 6 bis 8 dargestellt angewendet.

Sie besteht aus einer festen Schwingenplatte (15), die auch als Teil der Montageplatte (9), wie in Fig. 9 gezeigt, ausgebildet sein kann, und einer unterhalb dieser angeordneten, beweglichen Schwingenplatte (16), wobei auch eine vertauschte Lage möglich ist. Die bewegliche Schwingenplatte (15) trägt eine Vorrichtung zur kraftschlüssigen Montage der Deichsel (8). An der Vorderkante der festen Schwingenplatte (15) und der Hinterkante der beweglichen Schwingenplatte (16) befindet sich jeweils ein Widerlager für Seilhülle und Seilzug (4), vorzugsweise als senkrechte Lochreihen ausgebildet, um das Übersetzungsverhältnis zur Optimierung der Bremswirkung variabel gestalten zu können.

Fig. 6 zeigt eine Vorderansicht aus der ersichtlich ist, dass sich die mit Gelenken (17) befestigten Verbindungspleuel (18) zwischen fester (15) und beweglicher (16) Schwingenplatte kreuzen. Fig. 7 zeigt eine Seitenansicht und Fig. 8 eine Draufsicht, aus der die Gelenkbefestigungslinien für die feste (19) und bewegliche (20) Schwingenplatte (15, 16) ersichtlich sind. Diese Konstruktion widersteht der Torsionsbeanspruchung durch die Stützlast an einer asymmetrisch montierten Tiefdeichsel und hält den Anhänger sicher in der Spur bei leichtgängiger axialer Beweglichkeit.

Offensichtlich kann die mit den Bremszangenhälften gebildete Bremsausrüstung auch mit anderen Mitteln zum Erzeugen einer Bremskraft bzw. Mitteln zum Betätigen der Bremszangenhälften als dem hier beschriebenen Schwingenapparat zusammenwirken, ebenso wie der beschriebene Schwingenapparat auch mit anderen Radbremsen, beispielsweise mit einfachen, herkömmlichen Felgenbremsen zusammenwirken kann, wobei die durch den Schwingenapparat erzeugbare Bremskraft nicht nur eine Bremse bzw. Bremsausrüstung betätigen muss, sondern die durch den Schwingenapparat erzeugte Bremskraft über Seilzüge, pneumatische, hydraulische oder elektromechanische Mittel auf zwei oder mehrere Radbremsen verteilt werden kann.

### Bezugszeichen

- 1: Rohrrahmen
- 2: Rad oder Bremsscheibe
- 3: Bremszangenhälfte mit Stößel
- 4: Widerlager für Seilzug/Seilhülle
- 5: Rückholfeder
- 6: Seilzug mit Seilhülle
- 7: Schwingenapparat
- 8: Deichsel
- 9: Montageplatte für Bremsapparat
- 10: Befestigungselemente
- 11: Lager der Bremszange
- 12: Felge
- 13: Bremsbelag
- 14: Reifen
- 15: Feste Schwingenplatte
- 16: Bewegliche Schwingenplatte
- 17: Gelenk
- 18: Verbindungspleuel
- 19: Gelenkbefestigungslinie feste Schwingenplatte
- 20: Gelenkbefestigungslinie bewegliche Schwingenplatte

## Patentansprüche

1. Bremsausrüstung zum Bremsen eines ersten Rades (2) und eines zweiten Rades (2) eines mindestens zweispurigen Fahrzeugs, insbesondere eines Anhängers wie beispielsweise eines Fahrradanhängers, mit zwei gegeneinander beweglichen Bremszangenhälften (3) und Mitteln zur Betätigung der beiden Bremszangenhälften (3), **dadurch gekennzeichnet, dass** eine Seite einer der beiden Bremszangenhälften (3) ausgebildet ist, um um das erste Rad (2) oder um eine am ersten Rad (2) angeordnete Bremsscheibe (2) herum geführt zu werden und auf eine Außenseite einer Felge (12) oder der Bremsscheibe (2) des ersten Rades (2) zu wirken, und die andere Seite der einen Bremszangenhälfte (3) als Stößel ausgebildet und angeordnet ist, um auf eine Innenseite einer Felge (12) oder einer Bremsscheibe (2) des zweiten Rades (2) zu wirken, und dass eine Seite der anderen der beiden Bremszangenhälften (3) ausgebildet ist, um um das zweite Rad (2) oder um eine daran angeordnete Bremsscheibe (2) herum geführt zu werden und auf eine Außenseite einer Felge (12) oder Bremsscheibe (2) des zweiten Rades (2) zu wirken, und die andere Seite der anderen Bremszangenhälfte (3) als Stößel ausgebildet und angeordnet ist, um auf die Innenseite einer Felge (12) oder Bremsscheibe (2) des ersten Rades (2) zu wirken, so dass jede Bremszangenhälfte (3) auf beide Räder (2) oder deren Bremsscheiben (2) gleichzeitig wirken kann.

2. Bremsausrüstung nach Anspruch 1, **dadurch gekennzeichnet, dass** beide Bremszangenhälften (3) baugleich sind.

3. Bremsausrüstung nach Anspruch 1 und 2 **dadurch gekennzeichnet, dass** die Bremszangenhälften (3) gegeneinander schwimmend in festen Lagern (11) montiert sind.

4. Bremsausrüstung nach einem der vorstehenden Ansprüche, **dadurch gekennzeichnet, dass** die Seite mindestens einer der Bremszangenhälften (3), die ausgebildet ist, um um ein Rad (2) oder eine Bremsscheibe (2) herumgeführt zu werden, gebogen und insbesondere u-förmig ist.

5. Bremsausrüstung nach einem der vorstehenden Ansprüche, **dadurch gekennzeichnet, dass** die Seite mindestens einer der Bremszangenhälften (3), die ausgebildet ist, um um ein Rad (2) oder eine Bremsscheibe (2) herumgeführt zu werden, dem Stößel der anderen Bremszangenhälfte (3) an einer Felge (12) oder einer Bremsscheibe (2) genau entgegenwirkt.

6. Bremsausrüstung nach einem der vorstehenden Ansprüche, **dadurch gekennzeichnet, dass** beide Bremszangenhälften (3) mittels Seilzug (6) oder pneumatisch oder hydraulisch oder elektromechanisch gegeneinander bewegt werden.

7. Bremsausrüstung nach einem der vorstehenden Ansprüche, **dadurch gekennzeichnet, dass** die Länge der Bremszangenhälften (3) einstellbar ist.

8. Bremsausrüstung nach einem der vorstehenden Ansprüche, **dadurch gekennzeichnet, dass** mindestens eine der Bremszangenhälften (3) in einem mittleren, zwischen den beiden Seiten ausgebildeten Bereich stangenförmig ausgeführt ist und/oder zumindest teilweise einen mehreckigen, insbesondere viereckigen Querschnitt aufweist.

9. Bremsausrüstung nach einem der vorstehenden Ansprüche für eine Auflaufbremse für einen Anhänger mit einer Deichsel (8), **dadurch gekennzeichnet, dass** die Mittel zur Betätigung der beiden Bremszangenhälften (3) einen Schwingenapparat (7) als Verbindungsglied zwischen Deichsel (8) und Anhänger aufweisen, die eine mit dem Anhänger zu verbindende Schwingenplatte (15, 16) sowie eine bewegliche, mit der Deichsel (8) verbindbare Deichselaufnahme hat, wobei die Schwingenplatte (15, 16) und die Deichselaufnahme über Verbindungspleuel (18) derart gekoppelt sind, dass die Deichsel (8) axial gegenüber der Schwingenplatte (15, 16) beweglich ist, und dass eine Auflaufbremse durch ein axiales Verschieben der Deichsel (8) zur Schwingenplatte (15, 16) durch einen Seilzug (6), pneumatisch, hydraulisch oder elektromechanisch ausgelöst werden kann.

10. Bremsausrüstung nach Anspruch 9, **gekennzeichnet durch** eine bewegliche Schwingenplatte (16) als Deichselaufnahme oder als Träger für die Deichselaufnahme, wobei die Schwingenplatte (16) mit den Verbindungspleueln (18) beweglich mit der Schwingenplatte (15) verbunden ist.

11. Bremsausrüstung nach Anspruch 10, **dadurch gekennzeichnet, dass** die Verbindungspleuel (18) zueinander unter einem Winkel quer zur Fahrtrichtung angeordnet sind und sich die Verbindungspleuel (18) insbesondere quer zur Fahrtrichtung kreuzen.

12. Bremsausrüstung nach einem der vorstehenden Ansprüche, **dadurch gekennzeichnet, dass** alle Bauteile als Montageeinheit auf einer Montageplatte (9) mit Befestigungselementen (10) zur Montage an einem Fahrradanhänger angeordnet sind.

## Claims

1. Brake equipment for braking a first wheel (2) and a second wheel (2) of an at least two-track vehicle, in particular a trailer such as a bicycle trailer, having two brake caliper halves (3) which can move relative to one another and means for actuating the two brake caliper halves (3), **characterized in that in that** one side of one of the two brake caliper halves (3) is designed to be guided around the first wheel (2) or around a brake disk (2) arranged on the first wheel (2) and to act on an outer side of a rim (12) or the brake disk (2) of the first wheel (2), and the other side of the one brake caliper half (3) is designed as a plunger and arranged to act on an inner side of a rim (12) or a brake disk (2) of the second wheel (2), and **in that** one side of the other of the two brake caliper halves (3) is designed to be guided around the second wheel (2) or around a brake disk (2) arranged thereon and to act on an outer side of a rim (12) or brake disk (2) of the second wheel (2), and the other side of the other brake caliper half (3) is designed as a plunger and arranged to act on the inside of a rim (12) or brake disk (2) of the first wheel (2), so that each brake caliper half (3) can act on both wheels (2) or their brake disks (2) simultaneously.

2. Brake equipment according to claim 1, **characterized in that** both brake caliper halves (3) are structurally identical.

3. Brake equipment according to claims 1 and 2, **characterized in that** the brake caliper halves (3) are mounted floating against each other in fixed bearings (11).

4. Brake equipment according to one of the preceding claims, **characterized in that** the side of at least one of the brake caliper halves (3), which is designed to be guided around a wheel (2) or a brake disc (2), is curved and in particular U-shaped.

5. Brake equipment according to one of the preceding claims, **characterized in that** the side of at least one of the brake caliper halves (3), which is designed to be guided around a wheel (2) or a brake disc (2), precisely counteracts the plunger of the other brake caliper half (3) on a rim (12) or a brake disc (2).

6. Brake equipment according to one of the preceding claims, **characterized in that** both brake caliper halves (3) are moved against each other by means of a cable pull (6) or pneumatically or hydraulically or electromechanically.

7. Brake equipment according to one of the preceding claims, **characterized in that** the length of the brake caliper halves (3) is adjustable.

8. Brake equipment according to one of the preceding claims, **characterized in that** at least one of the brake caliper halves (3) is rod-shaped in a central region formed between the two sides and/or at least partially has a polygonal, in particular quadrangular cross-section.

9. Brake equipment according to one of the preceding claims for an overrun brake for a trailer with a drawbar (8), **characterized in that** the means for actuating the two brake caliper halves (3) have a rocker apparatus (7) as a connecting link between the drawbar (8) and the trailer, which has a rocker plate (15, 16) to be connected to the trailer and a movable drawbar receptacle which can be connected to the drawbar (8), the swinging plate (15, 16) and the drawbar receptacle being coupled via connecting rods (18) in such a way that the drawbar (8) can move axially with respect to the swinging plate (15, 16), and that an overrun brake can be triggered pneumatically, hydraulically or electromechanically by an axial displacement of the drawbar (8) with respect to the swinging plate (15, 16) by means of a cable pull (6).

10. Brake equipment according to claim 9, **characterized by** a movable rocker plate (16) as a drawbar receiver or as a carrier for the drawbar receiver, the rocker plate (16) being movably connected to the rocker plate (15) by means of the connecting rods (18).

11. Brake equipment according to claim 10, **characterized in that** the connecting rods (18) are arranged at an angle to one another transverse to the direction of travel and the connecting rods (18) cross one another, in particular transverse to the direction of travel.

12. Brake equipment according to one of the preceding claims, **characterized in that** all components are arranged as a mounting unit on a mounting plate (9) with fastening elements (10) for mounting on a bicycle trailer.

## Revendications

1. Equipement de freinage pour freiner une première roue (2) et une deuxième roue (2) d'un véhicule au moins à deux voies, en particulier d'une remorque comme par exemple une remorque de bicyclette, avec deux moitiés d'étrier de frein (3) mobiles l'une par rapport à l'autre et des moyens pour actionner les deux moitiés d'étrier de frein (3), **caractérisé en ce qu'**un côté d'une des deux moitiés d'étrier de frein (3) est réalisé pour être guidé autour de la première roue (2) ou autour d'un disque de frein (2) disposé sur la première roue (2) et pour agir sur un côté extérieur d'une jante (12) ou du disque de frein (2) de la première roue (2), et l'autre côté de l'une des moitiés d'étrier de frein (3) est réalisé sous la forme d'un poussoir et disposé pour agir sur un côté intérieur d'une jante (12) ou d'un disque de frein (2) de la deuxième roue (2), et qu'un côté de l'autre des deux moitiés d'étrier de frein (3) est réalisé pour être guidé autour de la deuxième roue (2) ou autour d'un disque de frein (2) disposé sur celle-ci et pour agir sur un côté extérieur d'une jante (12) ou d'un disque de frein (2) de la deuxième roue (2), et l'autre côté de l'autre moitié d'étrier de frein (3) est réalisé sous la forme d'un poussoir et disposé pour agir sur le côté intérieur d'une jante (12) ou d'un disque de frein (2) de la première roue (2), de sorte que chaque moitié d'étrier de frein (3) peut agir simultanément sur les deux roues (2) ou les disques de frein (2) de celles-ci.

2. Equipement de freinage selon la revendication 1, **caractérisé en ce que** les deux moitiés d'étrier de frein (3) sont de même structure.

3. Equipement de freinage selon la revendication 1 et 2, **caractérisé en ce que** les moitiés d'étrier de frein (3) sont montées de manière flottante l'une par rapport à l'autre dans des paliers fixes (11).

4. Equipement de freinage selon l'une quelconque des revendications précédentes, **caractérisé en ce que** le côté d'au moins une des moitiés d'étrier de frein (3), qui est réalisé pour être guidé autour d'une roue (2) ou d'un disque de frein (2), est courbé et en particulier en forme de u.

5. Equipement de freinage selon l'une quelconque des revendications précédentes, **caractérisé en ce que** le côté d'au moins une des moitiés d'étrier de frein (3), qui est réalisé pour être guidé autour d'une roue (2) ou d'un disque de frein (2), agit exactement à l'encontre du poussoir de l'autre moitié d'étrier de frein (3) sur une jante (12) ou un disque de frein (2).

6. Equipement de freinage selon l'une quelconque des revendications précédentes, **caractérisé en ce que** les deux moitiés d'étrier de frein (3) sont déplacées l'une par rapport à l'autre au moyen d'un câble de traction (6) ou de manière pneumatique ou hydraulique ou électromécanique.

7. Equipement de freinage selon l'une quelconque des revendications précédentes, **caractérisé en ce que** la longueur des moitiés d'étrier de frein (3) est réglable.

8. Equipement de freinage selon l'une quelconque des revendications précédentes, **caractérisé en ce qu'**au moins une des moitiés d'étrier de frein (3) est conçue en forme de barre dans une zone centrale réalisée entre les deux côtés et/ou présente au moins en partie une section transversale polygonale, en particulier quadrangulaire.

9. Equipement de freinage selon l'une quelconque des revendications précédentes pour un frein à inertie pour une remorque avec un timon (8), **caractérisé en ce que** les moyens pour actionner les deux moitiés d'étrier de frein (3) présentent un appareil à bras oscillant (7) sous la forme d'un organe de liaison entre le timon (8) et la remorque, qui possède une plaque de bras oscillant (15, 16) à relier à la remorque ainsi qu'un logement de timon mobile, pouvant être relié au timon (8), dans lequel la plaque de bras oscillant (15, 16) et le logement de timon sont accouplés par l'intermédiaire de bielles de liaison (18), de telle sorte que le timon (8) est mobile axialement par rapport à la plaque de bras oscillant (15, 16), et qu'un frein à inertie peut être déclenché par un déplacement axial du timon (8) par rapport à la plaque de bras oscillant (15, 16) par un câble de traction (6), de manière pneumatique, hydraulique ou électromécanique.

10. Equipement de freinage selon la revendication 9, **caractérisé par** une plaque de bras oscillant (16) mobile sous la forme d'un logement de timon ou sous la forme d'un support pour le logement de timon, dans lequel la plaque de bras oscillant (16) est reliée de manière mobile à la plaque de bras oscillant (15) avec les bielles de liaison (18).

11. Equipement de freinage selon la revendication 10, **caractérisé en ce que** les bielles de liaison (18) sont disposées l'une par rapport à l'autre à un angle transversalement par rapport au sens de marche et les bielles de liaison (18) se croisent en particulier transversalement par rapport au sens de marche.

12. Equipement de freinage selon l'une quelconque des revendications précédentes, **caractérisé en ce que** tous les composants en tant qu'unité de montage sont disposés sur une plaque de montage (9) avec des éléments de fixation (10) pour le montage sur une remorque de bicyclette.
